(19) Europäisches Patentamt / European Patent Office / Office européen des brevets

(11) **EP 3 763 745 A1**

(12) **EUROPEAN PATENT APPLICATION**

(43) Date of publication:
**13.01.2021 Bulletin 2021/02**

(51) Int Cl.:
**C08F 2/06** (2006.01)          **C08F 210/16** (2006.01)
**C08F 4/6592** (2006.01)

(21) Application number: **19185479.3**

(22) Date of filing: **10.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
• **AL-HAJ, Mohammad Ali**
  **06101 Porvoo (FI)**
• **AJELLAL, Noureddine**
  **06101 Porvoo (FI)**

(74) Representative: **Kador & Partner PartG mbB**
**Corneliusstraße 15**
**80469 München (DE)**

(54) **HIGH TEMPERATURE SOLUTION PROCESS FOR THE COPOLYMERIZATION OF ALPHA-OLEFINS**

(57) A process for the polymerization of a polymer from an $\alpha$-olefin monomer and one or more $\alpha$-olefin comonomers in the presence of a catalyst, the process having a catalyst performance index (CPI) not higher than 15, wherein the catalyst performance index is defined according to equation (I):

$$CPI = \frac{(F_{C2} + F_{C8})/F_{Cat}}{Catalyst\ Productivity} \quad \text{(I)} \quad \text{(i)}$$

wherein $F_{C2}$ and $F_{C8}$ are the feed velocities of the monomer and comonomer feed streams in kg/h, $F_{Cat}$ is the feed velocity of the catalyst and the catalyst productivity is the weight ratio of produced polymer to catalyst.

Fig. 1

EP 3 763 745 A1

**Description**

The present invention is concerned with a high temperature solution process for the copolymerization of α-olefins and a copolymer obtainable by said process.

**Background**

High temperature solution processes for olefin polymerization in general have proven to provide improved efficiency, i.e. higher throughput at lower energy consumption for separation of volatile compounds. Furthermore, fouling problems have also been decreased by utilization of such processes.

In particular, in high temperature solution polymerisation processes yielding copolymers of ethylene and an α-olefin, the catalyst must fulfil a set of very strict requirements. More particularly, for achieving a production of such copolymers with a density in the area of 0.85 kg/m$^3$ and MFR$_2$ values of about 0.3 g/10 min with high productivity, the ability for comonomer incorporation of the catalyst, in particular the reactivity for higher comonomers must be controlled. To withstand the high temperatures in such polymerization processes, the catalyst must be thermally stable. This can be achieved e.g. by incorporation of higher weight comonomers. However, higher weight comonomers tend to be less reactive and, hence, have lower incorporation numbers than lower weight comonomer alternatives.

WO 2007/136497 A2 discloses a process for the polymerization of ethylene and optionally one or more α-olefins under continuous solution polymerization conditions to prepare a high molecular weight polymer comprising conducting the polymerization in the presence of a catalyst composition comprising a transition metal complex and an activating cocatalyst under conditions that result in a value for the polymerization index Ψ. However, the incorporation rates of high comonomers into the polymer still are not satisfying.

**Object of the invention**

It is therefore still desired to find a high temperature solution process for the copolymerisation of α-olefins, which offers improved incorporation of comonomers, in particular of high molecular weight comonomers, into the polymer.

**Summary of the invention**

It now has been surprisingly found out that the above-mentioned problem is solved by a process for the polymerization of a polymer from an α-olefin monomer and one or more α-olefin comonomers in the presence of a catalyst, whereby the process has a catalyst performance index (CPI) not higher than 2.0.

**Definitions**

The catalyst performance index (CPI) is defined according to equation (I):

$$CPI = \frac{(F_{C2}+F_{C8})/F_{Cat}}{Catalyst\ Productivity} \qquad (I)$$

wherein $F_{C2}$ and $F_{C8}$ are the feed velocities of the monomer and comonomer feed streams in kg/h, $F_{Cat}$ is the feed flow rate of the catalyst and the catalyst productivity is the weight ratio of produced polymer to catalyst. This index makes a statement about the connection between the output of the reaction and the amount of catalyst used therefore. This parameter can be used to compare the efficiency of catalysts in terms of the total fraction of monomers fed to the process, which are incorporated into the polymer even without knowing the exact monomer conversion.

The polymer properties index (PPI) is defined according to equation (II):

$$PPI = \frac{MFR_{10}}{MFR_{21.9}} \cdot \left[\frac{\rho_{Pol}-\rho_{am,Pol}}{\rho_{cry,Pol}-\rho_{am,Pol}}\right] \cdot \frac{(C8)_{Conversion}}{(C2)_{Conversion}} \qquad (II)$$

wherein $MFR_{10}$ is the melt index of the polymer measured under the conditions of a temperature of 190 °C and a load of 10 kg in accordance with ASTM D 1238, $MFR_{21.9}$ is the melt index of the polymer measured under the conditions of a temperature of 190 °C and a load of 21.9 kg in accordance with ASTM D 1238, $\rho_{Pol}$ is the density of the polymer in kg/m$^3$, $\rho_{am,Pol}$ is the density of amorphous polymer in kg/m$^3$, $\rho_{cry,Pol}$ is the density of crystalline polymer in kg/m$^3$, $(C8)_{conversion}$ is the weight ratio of comonomer included into the polymer chain to comonomer fed to the process, and

$(C2)_{conversion}$ is the weight ratio of monomer included into the polymer chain to monomer fed to the process. The values of $\rho_{am,Pol}$ and $\rho_{cry,Pol}$ are 853 and 1004 kg/m³ respectively.

**Detailed description**

Short description of the Figures

Figure 1    shows the catalyst performance indices for Inventive Examples IE1-IE4 as well as Comparative Examples CE1-CE2 in dependency from the density of the produced polymer.

Figure 2    shows the sums of the catalyst performance indices and polymer properties indices for Inventive Examples IE1-IE4 as well as Comparative Examples CE1-CE2 in dependency from the density of the produced polymer.

Figure 3    shows the polymer properties indices for Inventive Examples IE1-IE4 as well as Comparative Examples CE1-CE2 in dependency from the density of the produced polymer.

Detailed description of the invention

The process of the present invention is a process for the production of an α-olefin copolymer. Preferably, the process is a solution polymerization process, more preferably, a high temperature solution polymerization process.
In solution polymerisation processes, the monomer is polymerized at a temperature in which the polymer is dissolved in the solvent mixture, which is present in the process.
The process includes one or more polymerization reactors. Suitable reactors include unstirred or stirred, spherical, cylindrical and tank-like vessels and recirculating loop reactors and tubular reactors. Such reactors typically include feeding points for monomer, optional comonomer, solvent, catalyst and optional other reactants and additives and withdrawal points for polymer solutions. In addition, the reactors may include heating or cooling means.
Typically, the solution polymerization process is a high temperature solution polymerization process, using a polymerization temperature of greater than 100 °C. Preferably, the polymerization temperature is at least 110 °C, more preferably at least 150 °C. The temperature in the reactors is such that the polymer formed in the polymerization reaction is completely dissolved in the reaction mixture comprising the solvent, the comonomer(s), the chain transfer agent and the polymer. The temperature is suitably greater than the melting temperature of the polymer. Thus, when the polymer is a homo- or copolymer of ethylene the temperature is suitably from 130 to 250 °C, such as from 150 to 200 °C, depending on the content of comonomer units in the polymer. When the polymer is a homo- or copolymer of propylene the temperature is suitably from 165 to 250 °C, such as from 170 to 220 °C, depending on the content of comonomer units in the polymer. The polymerization temperature can be up to 250 °C. The pressure in the solution polymerization process is preferably in a range of from 30 to 200 bar, preferably from 50 to 160 bar and more preferably from 60 to 150 bar.
The monomer used in the present process is an α-olefin, preferably an olefin selected from ethylene, propylene and 1-butene, most preferably ethylene.
Preferably, also a comonomer is used in the polymerization. When the monomer is an olefin monomer as disclosed above, then the comonomer is different from the olefin monomer and is selected from the group consisting of linear and cyclic olefins and diolefins having from 2 to 12 carbon atoms and the mixtures thereof. More preferably, the comonomer is an α-olefin different from the olefin monomer and is selected from the group consisting of linear olefins having from 2 to 12 carbon atoms and mixtures thereof, preferably 4 to 10 carbon atoms, most preferably 1-octene.
Preferably, the α-olefin copolymer produced by the polymerization of the present invention is a polyethylene copolymer.
The polymerization is typically conducted in the presence of an olefin polymerization catalyst. Preferably, the catalyst is comprises a specifically substituted, bridged hafnocene catalyst complex, comprising a cyclopentadienyl (Cp) ligand, a fluorenyl (Flu) ligand and a specifically covalent bridge connecting the two ligands, along with a boron based cocatalyst or an aluminoxane cocatalyst. Most preferably, the polymerization is conducted in the presence of an olefin polymerization process as described in WO 2018/178151, WO 2018/178152, WO 2018/108917, or WO 2018/108918.
In solution polymerization process a solvent is also present. The solvent is in liquid or supercritical state in the polymerization conditions. The solvent is typically and preferably a hydrocarbon solvent. The liquid hydrocarbon solvent used is preferably a $C_{5-12}$-hydrocarbon, which may be unsubstituted or substituted by $C_{1-4}$ alkyl group such as pentane, methyl pentane, hexane, heptane, octane, cyclohexane, methylcyclohexane and hydrogenated naphtha. More preferably, unsubstituted $C_{6-10}$-hydrocarbon solvents are used.
In addition, other components may be added into the reactor. It is known to feed hydrogen into the reactor for controlling the molecular weight of the polymer formed during the polymerization. The use of different antifouling compounds is also already known in the art. In addition, different kinds of activity boosters or activity retarders may be used for controlling the activity of the catalyst.

Catalyst performance index (CPI)

The process of the present invention has a catalyst performance index (CPI) of not higher than 15, preferably not higher than 10, more preferably not higher than 5 and most preferably not higher than 4. Preferably, the catalyst performance index of the process of the present invention is higher than 0.1, preferably higher than 0.5.

In a preferred embodiment of the invention, the process according to the present invention has a catalyst performance index (CPI), which further to the limit as set out above fulfils equation (IIIa):

$$CPI < -0.267 \, \frac{m^3}{\text{kg}} \, \rho_{Pol} + 259 \qquad \text{(IIIa)}$$

wherein $\rho_{Pol}$ is the density of the polyethylene in kg/m³.

In an even more preferred embodiment of the invention, the process according to the present invention has a catalyst performance index (CPI), which further to the limit as set out above fulfils equation (IIIb):

$$CPI < -0.044 \, \frac{m^3}{\text{kg}} \, \rho_{Pol} + 43.3 \qquad \text{(IIIb)}$$

wherein $\rho_{Pol}$ is the density of the polyethylene in kg/m³.

If the CPI is defined by both an absolute limit and a relation according to e.g. equations (IIIa) and (IIIb), it should be understood that both requirements have to be fulfilled. Hence, if the equation allows for a value, which is not allowed by the absolute value, the limitation of the absolute value is determining and vice versa.

Polymer properties index (PPI)

The polymer properties index PPI of the present invention for a density of produced polymer of more than 882 kg/m³, e.g. in the crystalline regime, is preferably above 0.6, more preferably above 0.7. Likewise, the PPI of the present invention for a density of produced polymer of less than 882 kg/m³, e.g. in the amorphous regime, is preferably above 0.1, more preferably above 0.2. Moreover, the PPI of the present invention is preferably below 10, more preferably below 9.

Even more preferably, the process according to the present invention has a polymer properties index (PPI) fulfilling equation (IVa):

$$PPI > 0.017 \, \frac{m^3}{kg} \, \rho_{Pol} - 14.3 \qquad \text{(IVa)}$$

In an even more preferred embodiment of the invention, the process according to the present invention has a polymer properties index (PPI) fulfilling equation (IVb):

$$PPI > 0.039 \, \frac{m^3}{kg} \, \rho_{Pol} - 33.7 \qquad \text{(IVb)}$$

wherein $\rho_{Pol}$ is the density of the polymer in kg/m³.

Likewise, if the PPI is defined by both an absolute limit and a relation according to e.g. equations (Via) and (Vlb), it should be understood that both requirements have to be fulfilled. Hence, if the equation allows for a value, which is not allowed by the absolute value, the limitation of the absolute value is determining and vice versa.

Sum of CPI and PPI (CPI+PPI)

Preferably, the process of the present invention has a sum of the catalyst performance index and the polymer properties index (CPI+PPI) of not higher than 15, preferably not higher than 10, more preferably not higher than 5 and most preferably not higher than 4. Preferably, the sum of the catalyst performance index and the polymer properties index (CPI+PPI) is higher than 0.1, preferably higher than 0.5.

The effect of the present invention is achievable with each of the requirements of CPI, PPI or CPI+PPI solely. However, these requirements can also be combined to further strengthen the effect. Thereby, combinations of the same level of preference are preferably, but not limiting.

Solution polymerization process

The process of the present invention preferably has a catalyst productivity between 100 and 2500 kg/g, more preferably between 200 and 2250 kg/g, and most preferably between 300 and 2000 kg/g. Moreover, the comonomer to monomer feed ratio of the process of the present invention is preferably between 0.0 and 1.8, more preferably between 0.05 and 1.7, and most preferably between 0.10 and 1.65.

Moreover, the present invention targets a polymer obtainable by a process according to any of the preceding claims. Said polymer produced in the process of the present invention preferably has a density of between 850 and 960 $kg/m^3$, more preferably 855 and 940 $kg/m^3$ and most preferably 860 and 915 $kg/m^3$. Furthermore, the polymer has a $FRR_{10/2}$ between 5 and 15, preferably between 6 and 12 and most preferably, between 7 and 10, wherein the $FRR_{10/2}$ is the flow rate ratio between the $MFR_{10}$ and the $MFR_2$.

Measurement and Simulation Methods

*Melt flow rate and flow rate ratio*

The melt flow rate (MFR) is determined according to ISO 1133 and is indicated in g/10min. The MFR is an indication of the flowability, and hence the processability, of the polymer. The higher the melt flow rate, the lower the viscosity of the polymer. The $MFR_{10}$ is determined at 190 °C for polyethylene and at a loading of 2.16 kg ($MFR_2$), 5.00 kg ($MFR_5$), 10.00 kg ($MFR_{10}$) or 21.6 kg ($MFR_{21}$).

The quantity FRR (flow rate ratio) is an indication of molecular weight distribution and denotes the ratio of flow rates at different loadings. Thus, $FRR_{21/10}$ denotes the value of $MFR_{21}/MFR_{10}$.

*Density*

Density of the polymer is measured according to ISO 1183-1 method A using compression moulded samples. It is indicated in $kg/m^3$.

*Content of comonomer*

The measurement of comonomer content is done using quantitative nuclear-magnetic resonance (NMR) spectroscopy. A detailed description of the method used can be found in EP 2 933 277 A1, para. [0102] - [0114].

The comonomer content is herein assumed to follow the mixing rule (equation V):

$$C_b = w_1 \cdot C_1 + w_2 \cdot C_2 \qquad \text{(V)}$$

where C is the content of comonomer in weight-%, w is the weight fraction of the component in the mixture and subscripts b, 1 and 2 refer to the overall mixture, component 1 and component 2, respectively.

*Catalyst productivity*

The productivity of the catalyst was determined as the amount of polymer produced in the process (in kg/h) divided by the amount of catalyst fed into the process (in g/h).

Examples

The Inventive Examples IE1 to IE4 are examples of high temperature solution copolymerization processes, in which ethylene has been copolymerized with 1-octene (C8). 1-octene is a high molecular weight comonomer and, hence, is less reactive than lower weight comonomers. Therefore, these examples illustrate the improved comonomer incorporation as effected by the present invention.

The polymers of IE1 to IE4 have been prepared in a continuous polymerization process that is operated under

**EP 3 763 745 A1**

conditions comparable to commercial scale production facilities. In these runs, a metallocene catalyst according to WO 2018/178151, WO 2018/178152, WO 2018/108917, or WO 2018/108918 is used. The reactor pressure is kept around 90 bar and polymerization temperatures between 140 °C and 220 °C.

The Comparative Example have been taken from WO 2016/003880 A1, whereas CE1 is Inv 1 (I1) found in table 1 and CE2 is Inv 5 (I1) found in table 3 of WO 2016/003880 A1.

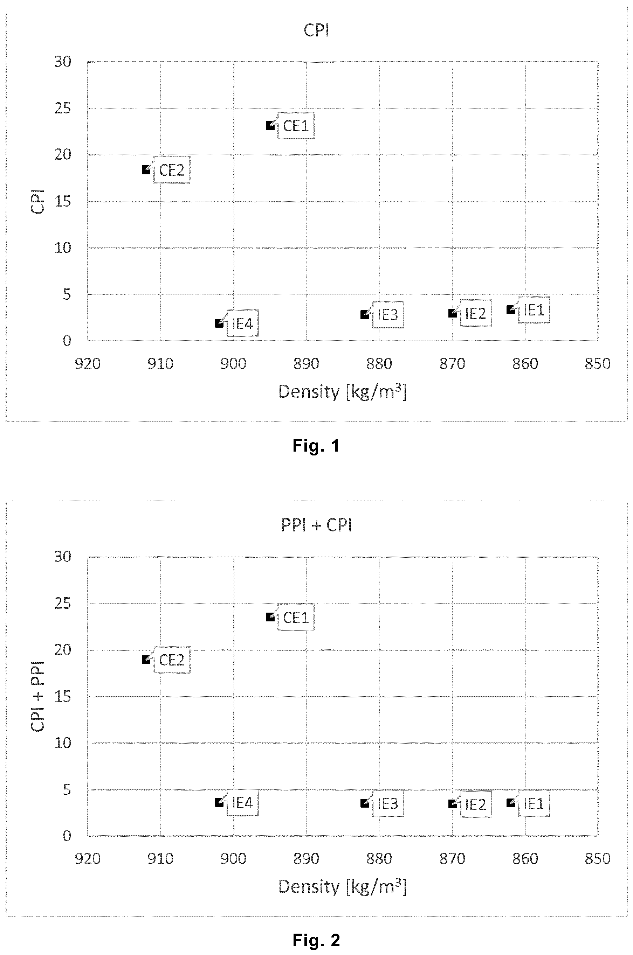

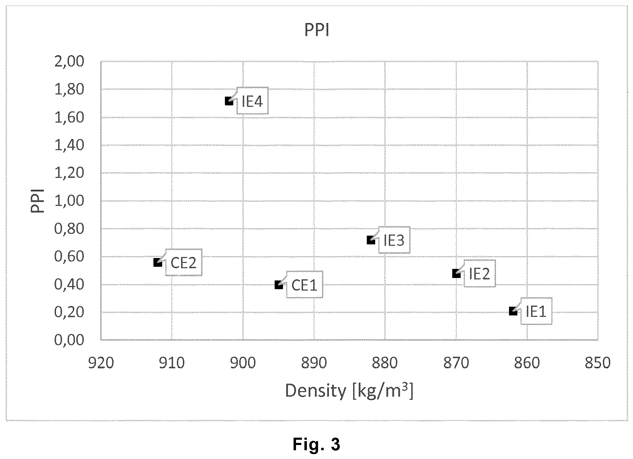

For both, the Inventive as well as the Comparative Examples, the catalyst performance index (CPI, table 1, Figure 1), the polymer properties index (PPI, table 2, Figure 3) have been determined as well as the sum of the catalyst performance index and the polymer properties index (CPI+PPI; table 3, Figure 2) have been determined.

Table 1: Catalyst performance index (CPI) values for the Inventive and Comparative Examples.

| Example | Density [kg/m$^3$] | Catalyst Productivity [kg/g] | CPI |
|---|---|---|---|
| IE1 | 862 | 1106 | 3.37 |
| IE2 | 870 | 954 | 3.00 |
| IE3 | 882 | 878 | 2.84 |
| IE4 | 902 | 357 | 1.92 |
| CE1 | 895 | 1300 | 23.17 |
| CE2 | 912 | 1400 | 18.41 |

In particular, in combination with Figure 1, it can be seen that the present invention can provide better incorporation of higher molecular weight comonomers into the polymer. This is in particular shown by the C8/C2 feed ratios in comparison with the catalyst activity. Even with lower catalyst activities, the present invention provides comparable or even better C8/C2 feed ratios in comparison to the prior art.

Table 2: Polymer properties index (PPI) values for the Inventive and Comparative Examples.

| Example | FFR$_{10/21 \cdot 9}$ | $\rho_{PE}$ [kg/m$^3$] | $\rho_{am,PE}$ [kg/m$^3$] | $\rho_{cry,PE}$ [kg/m$^3$] | PPI |
|---|---|---|---|---|---|
| IE1 | 9.15 | 862 | 853 | 1004 | 0.21 |
| IE2 | 9.15 | 870 | 853 | 1004 | 0.48 |
| IE3 | 9.15 | 882 | 853 | 1004 | 0.72 |
| IE4 | 8.69 | 902 | 853 | 1004 | 1.72 |
| CE1 | 6.10 | 895 | 853 | 1004 | 0.40 |
| CE2 | 5.80 | 895 | 853 | 1004 | 0.56 |

The values of the polymer properties index can be interpreted in combination with Figure 3. From these values, it can be seen that in the process of the present invention higher amounts of higher molecular weight comonomers (1-octene) are incorporated in the polymer.

Table 3: Sum of polymer properties index and catalyst performance index (CPI+PPI) values for the Inventive and Comparative Examples.

| Example | CPI+PPI |
|---|---|
| IE1 | 3.58 |
| IE2 | 3.48 |
| IE3 | 3.56 |
| IE4 | 3.64 |
| CE1 | 23.57 |
| CE2 | 18.97 |

6

**Claims**

1. A process for the polymerization of a polymer from an $\alpha$-olefin monomer and one or more $\alpha$-olefin comonomers in the presence of a catalyst and optionally a chain transfer agent (hydrogen), the process having a catalyst performance index (CPI) not higher than 15, wherein the catalyst performance index is defined according to equation (I):

$$CPI = \frac{(F_{C2}+F_{C8})/F_{Cat}}{Catalyst\ Productivity} \qquad (I)$$

   wherein $F_{C2}$ and $F_{C8}$ are the feed velocities of the monomer and comonomer feed streams in kg/h, $F_{Cat}$ is the feed velocity of the catalyst and the catalyst productivity is the weight ratio of produced polymer to catalyst.

2. The process according to claim 1, wherein the process has a sum of the catalyst performance index and the polymer properties index (CPI+PPI) of not higher than 15.

3. The process according to any of claims 1 or 2, wherein the process has a polymer properties index (PPI) for a density of produced polymer of more than 882 kg/m$^3$ of above 0.6 and for a density of produced polymer of less than 882 kg/m$^3$ of above 0.1
   wherein $\rho_{Pol}$ is the density of the polymer in kg/m$^3$ and,
   wherein the polymer properties index (PPI) is defined according to equation (IV):

$$PPI = \frac{MFR_{10}}{MFR_{21.9}} \cdot \left[\frac{\rho_{Pol}-\rho_{am,Pol}}{\rho_{cry,Pol}-\rho_{am,Pol}}\right] \cdot \frac{(C8)_{Conversion}}{(C2)_{Conversion}} \qquad (II)$$

   wherein

   $MFR_{10}$ is the melt index of the polymer measured under the conditions of a temperature of 190 °C and a load of 10 kg in accordance with ASTM D 1238,
   $MFR_{21.9}$ is the melt index of the polymer measured under the conditions of a temperature of 190 °C and a load of 21.9 kg in accordance with ASTM D 1238,
   $\rho_{Pol}$ is the density of the polymer in kg/m$^3$,
   $\rho_{am,Pol}$ is the density of amorphous polymer in kg/m$^3$,
   $\rho_{cry,Pol}$ is the density of crystalline polymer in kg/m$^3$,
   $(C8)_{conversion}$ is the weight ratio of comonomer included into the polymer chain (comonomer reacted) to comonomer fed to the process, and
   $(C2)_{conversion}$ is the weight ratio of monomer included into the polymer chain (monomer reacted) to monomer fed to the process.

4. The process according to any of claims 1 or 2, wherein the catalyst performance index (CPI) further fulfils equation (IIIa):

$$CPI < -0.267\ \frac{m^3}{\text{kg}}\rho_{Pol} + 259 \qquad (IIIa)$$

   wherein $\rho_{Pol}$ is the density of the polyethylene in kg/m$^3$.

5. The process according to any of the preceding claims, the process further having a polymer properties index (PPI) fulfilling equation (IVa):

$$PPI > 0.017\ \frac{m^3}{kg}\rho_{Pol} - 14.3 \qquad (IVa)$$

6. The process according to any of the preceding claims, wherein the polymer has a density of between 850 and 960 kg/m$^3$, preferably 855 and 940 kg/m$^3$ and most preferably 860 and 930 kg/m$^3$.

7.  The process according to any of the preceding claims, wherein the polymer has a $FRR_{10/2}$ between 5.0 and 15, preferably between 6.0 and 12.0 and most preferably between 7.0 and 10.0.

8.  The process according to any of the preceding claims, wherein the catalyst productivity is between 100 and 2500 kg/g, preferably between 200 and 2250 kg/g, and most preferably between 300 and 2000 kg/g.

9.  The process according to any of the preceding claims, wherein the comonomer to monomer feed ratio is between 0.0 and 1.8, preferably between 0.1 and 1.7, and most preferably between 0.15 and 1.65.

10. The process according to any of the preceding claims, wherein the process is performed at a temperature of between 130 to 250 °C, preferably between 150 to 200 °C.

11. The process according to any of the preceding claims, wherein the process is performed at a pressure of between 30 to 200 bar, preferably between 50 to 160 bar, and most preferably between 60 to 150 bar.

12. The process according to any of the preceding claims, wherein the polymer is polyethylene.

13. A polymer obtainable by a process according to any of the preceding claims.

**Fig. 1**

**Fig. 2**

Fig. 3

Europäisches
Patentamt

European
Patent Office

Office européen
des brevets

# EUROPEAN SEARCH REPORT

Application Number

EP 19 18 5479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 860 200 A1 (BOREALIS AG [AT]) 15 April 2015 (2015-04-15) | 1,6,11, 13 | INV. C08F2/06 |
| A | * table 1 * | 2-5, 7-10,12 | C08F210/16 |
| | ----- | | ADD. |
| X | WO 2009/105938 A1 (DOW GLOBAL TECHNOLOGIES INC [US]; YUN XIAOBING [CN] ET AL.) 3 September 2009 (2009-09-03) | 1,4,6,7, 9,11-13 | C08F4/6592 |
| A | * tables 2,3 * | 2,3,5,8, 10 | |
| | ----- | | |
| X | WO 00/24793 A1 (EXXON CHEMICAL PATENTS INC [US]) 4 May 2000 (2000-05-04) * page 26; example 14 * | 1-13 | |
| | ----- | | |
| X | EP 1 739 110 A1 (BOREALIS TECH OY [FI]) 3 January 2007 (2007-01-03) | 1,4,6, 11-13 | |
| A | * example 10 * | 2,3,5, 7-10 | |
| | ----- | | |

TECHNICAL FIELDS
SEARCHED      (IPC)

C08F

The present search report has been drawn up for all claims

| Place of search | Date of completion of the search | Examiner |
|---|---|---|
| Munich | 23 January 2020 | Balmer, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 5479

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2020

| Patent document cited in search report | | Publication date | Patent family member(s) | | Publication date |
|---|---|---|---|---|---|
| EP 2860200 | A1 | 15-04-2015 | BR | 112015032443 A2 | 25-07-2017 |
| | | | CN | 105408363 A | 16-03-2016 |
| | | | EA | 201690201 A1 | 29-07-2016 |
| | | | EP | 2860200 A1 | 15-04-2015 |
| | | | JP | 6220455 B2 | 25-10-2017 |
| | | | JP | 2016531188 A | 06-10-2016 |
| | | | KR | 20160027137 A | 09-03-2016 |
| | | | US | 2016122448 A1 | 05-05-2016 |
| | | | WO | 2015051881 A1 | 16-04-2015 |
| WO 2009105938 | A1 | 03-09-2009 | BR | PI0820608 A2 | 16-06-2015 |
| | | | BR | 122018069310 B1 | 08-10-2019 |
| | | | CN | 102015874 A | 13-04-2011 |
| | | | EP | 2250219 A1 | 17-11-2010 |
| | | | ES | 2682264 T3 | 19-09-2018 |
| | | | JP | 5330414 B2 | 30-10-2013 |
| | | | JP | 2011513519 A | 28-04-2011 |
| | | | KR | 20100122104 A | 19-11-2010 |
| | | | US | 2011039082 A1 | 17-02-2011 |
| | | | WO | 2009105938 A1 | 03-09-2009 |
| WO 0024793 | A1 | 04-05-2000 | AT | 284422 T | 15-12-2004 |
| | | | AU | 757241 B2 | 06-02-2003 |
| | | | BR | 9914717 A | 10-07-2001 |
| | | | CA | 2345628 A1 | 04-05-2000 |
| | | | CN | 1328580 A | 26-12-2001 |
| | | | DE | 69922548 T2 | 05-01-2006 |
| | | | EP | 1196464 A1 | 17-04-2002 |
| | | | ES | 2233109 T3 | 01-06-2005 |
| | | | JP | 4689829 B2 | 25-05-2011 |
| | | | JP | 2002528463 A | 03-09-2002 |
| | | | MX | PA01003978 A | 06-06-2003 |
| | | | RU | 2232766 C2 | 20-07-2004 |
| | | | US | 6528670 B1 | 04-03-2003 |
| | | | US | 2002137959 A1 | 26-09-2002 |
| | | | WO | 0024793 A1 | 04-05-2000 |
| EP 1739110 | A1 | 03-01-2007 | AT | 427329 T | 15-04-2009 |
| | | | AT | 519796 T | 15-08-2011 |
| | | | BR | PI0613159 A2 | 21-12-2010 |
| | | | CN | 101213227 A | 02-07-2008 |
| | | | EA | 200702607 A1 | 30-10-2008 |
| | | | EP | 1739110 A1 | 03-01-2007 |
| | | | EP | 1904545 A1 | 02-04-2008 |
| | | | KR | 20080031920 A | 11-04-2008 |
| | | | PL | 1739110 T3 | 31-08-2009 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 18 5479

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2020

| Patent document cited in search report | Publication date | Patent family member(s) | Publication date |
|---|---|---|---|
| | | US   2010047440 A1 | 25-02-2010 |
| | | WO   2007003322 A1 | 11-01-2007 |
| | | ZA    200710135 B | 29-10-2008 |

EPO FORM P0459

For more details about this annex : see Official Journal of the European Patent Office, No. 12/82

**EP 3 763 745 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007136497 A2
- WO 2018178151 A
- WO 2018178152 A
- WO 2018108917 A
- WO 2018108918 A
- EP 2933277 A1
- WO 2016003880 A1